# EUROPÄISCHE PATENTSCHRIFT

(11) **EP 0 759 846 B1**
(45) Veröffentlichungstag und Bekanntmachung des Hinweises auf die Patenterteilung: **16.12.1998**
(21) Anmeldenummer: 95919312.9
(22) Anmeldetag: 21.05.1995
(51) Int. Cl.: B29C 45/14, A47G 23/06

(54) **VERFAHREN UND EINRICHTUNG ZUR HERSTELLUNG EINES AUFLAGE- ODER UNTERLAGETEILES UND EIN DAMIT HERGESTELLTES AUFLAGE- ODER UNTERLAGETEIL**
PROCESS AND DEVICE FOR PRODUCING AN UPPER OR LOWER HOLDING PLATE AND HOLDING PLATE THUS PRODUCED
PROCEDE ET DISPOSITIF DE FABRICATION D'UNE PLAQUE DE MAINTIEN SUPERIEURE OU INFERIEURE, ET PLAQUE DE MAINTIEN SUPERIEURE OU INFERIEURE AINSI PRODUITE

(30) Priorität: 21.05.1994 DE 4417871
(43) Veröffentlichungstag der Anmeldung: 05.03.1997
(73) Patentinhaber: PiK PARTNER IN KUNSTSTOFF, 91315 Höchstadt/Aisch (DE); HENGSTE & ECKARDT GMBH, 34420 Marsberg (DE)
(72) Erfinder: RABE, Jürgen, D-91315 Höchstadt/Aisch (DE); RITTINGHAUS, Ulf, D-34420 Marsberg (DE)
(74) Vertreter: Hufnagel, Walter, Dipl.-Ing., Dipl.-Wirtsch.-Ing.
(86) Internationale Anmeldenummer: DE9500657
(87) Internationale Veröffentlichungsnummer: WO9532088

(56) Entgegenhaltungen:
- EP-A- 0 637 494
- CH-A- 628 509
- DE-A- 3 608 805
- DE-A- 3 738 212
- US-A- 4 369 157
- PATENT ABSTRACTS OF JAPAN vol. 12 no. 364 (M-747) [3211] ,29.September 1988 & JP,A,63 120616 (MITSUBISHI MOTORS CORP) 25.Mai 1988,
- PATENT ABSTRACTS OF JAPAN vol. 7 no. 246 (M-253) [1391] ,2.November 1983 & JP,A,58 132529 (MATSUSHITA DENKI SANGYO) 6.August 1983,

## Beschreibung

Die Erfindung betrifft ein Verfahren und eine Einrichtung zur Herstellung eines Auflage- oder Unterlageteiles, insbesondere eines Kunststofftabletts, und ein damit hergestelltes Auflage- oder Unterlageteil, das einen ebenen Boden und gegebenenfalls einen an dessen Außenbegrenzung hochragenden Rand aufweist, wobei die Bodenoberfläche des Auflage- oder Unterlageteiles ein Rutschen aufgestellter Gegenstände hindernde Eigenschaften besitzt.

Es ist bekannt, Kunststofftabletts im Spritzgießverfahren aus Werkstoffen, wie Acrylbutadien-Styrol, Styrol-Acryl-Nitril, Polypropylen, Polycarbonat und dergleichen herzustellen. Derartige Kunststofftabletts besitzen eine ausreichende Formbeständigkeit und Festigkeit gegenüber den auftretenden Verkehrsbelastungen und gestatten aufgrund ihrer Resistenz gegenüber Reinigungsmitteln eine mehrfache Verwendung.

Sehr häufig finden Tabletts dieser Art Verwendung zum Servieren von Speisen in Flugzeugen, aber auch in Eisenbahn-Speisewagen und Omnibussen. Naturgemäß tritt hier das Problem auf, daß aufgestellte Gegenstände bei Lageveränderungen und Erschütterungen an einem Rutschen auf der Bodenoberfläche des Tabletts gehindert werden müssen.

Kann man nicht in bekannter Weise die aufzustellenden Gegenstände derart aneinander anpassen, daß sie unter weitgehender Vermeidung von Zwischenräumen vollständig innerhalb der durch den Rand umgrenzten Bodenoberfläche Platz finden und sich gegenseitig an einem verrutschen hindern, so ist man bestrebt, der Bodenoberfläche ein Verrutschen hemmende Eigenschaften zu verleihen, was entweder durch Einformung einer Oberflächenprofilierung beim Spritzgießen, durch loses Einlegen eines Zuschnittes aus einem Material entsprechender Hafteigenschaften oder durch Aufkleben eines Zuschnittes mit das Rutschen der Gegenstände hindernden Eigenschaften geschieht.

Die Strukturierung der Oberfläche eines Tablettkörpers aus den zuvor angegebenen Materialien führt gegenüber den unterschiedlichen Materialien aufzusetzender Gegenstände nicht immer zum Erfolg und kann bei tiefer und scharfkantiger Profilierung auch Probleme bei der Reinigung der Tabletts verursachen.

Das lose Einlegen eines Folienzuschnittes mit das Rutschen hindernden Eigenschaften bedingt ein gesondert zu handhabendes Teil sowohl beim Servieren als auch beim Abräumen und bedarf vor der Reinigung des Tablettes nach dem Gebrauch der Entsorgung, da eine Wiederverwendbarkeit des lose eingelegten Zuschnittes nicht gegeben ist.

Das Einkleben eines Zuschnittes mit das Rutschen aufgestellter Gegenstände hindernden Eigenschaften verteuert und kompliziert die Herstellung der Tabletts und gestattet nicht deren mehrfache Wiederverwendung, da eine ausreichende Widerstandsfähigkeit der Klebeverbindung zwischen den Tabletts und den eingeklebten Zuschnitten bei den angewendeten Waschtemperaturen und Reinigungsmitteln nicht zu erwarten ist.

Zur Herstellung eines Tabletts mit einer Antirutschschicht sind in der EP 0 637 494 A1 - die hinsichtlich der drei ersten Prioritäten ES 93 01 856, ES 94 00 285 und ES 94 00 286 als prioritätsältere, nicht vorveröffentlichte Druckschrift zu berücksichtigen ist - mehrere Verfahren angegeben, wie ein solcher Antirutschbelag auf einen Tablettkörper aufgebracht werden kann. Beispielsweise wird von einem Polyurethanfilm mit einer Dicke von 50 µm bis 300 µm jeweils ein Abschnitt abgetrennt, der mehr oder weniger der Größe der zu belegenden Oberfläche des Tabletts entspricht. Der Abschnitt wird in eine Spritzgießform eingelegt und anschließend hinterspritzt. Gemäß einem anderen Verfahren wird zunächst die Antirutschschicht thermisch mit einem Film verbunden. Hierauf wird die Tablettform in einem Formwerkzeug durch einen Hitzeprozeß erzeugt, bei dem die Folie in die gewünschte Form gepreßt oder gesaugt wird. Die Folie bildet hierbei das Tablettmaterial. In dieser Druckschrift sind auch Eigenschaften der Antirutschschicht angegeben, jedoch ist nichts über den Reibungskoeffizienten derselben ausgesagt.

Aus der DE 37 38 212 A1 ist es bekannt, ein Tablett mit einer rutschsicheren Oberfläche dadurch zu erzeugen, daß zunächst eine Antirutschfolie aus Weichkunststoff, dann eine Dekorfolie und hierauf eine Abdeckfolie höherer Wärmebelastbarkeit als diejenige der Dekorfolie in die Spritzgießform eingelegt und diese dann hinterspritzt werden.

Bei diesen Verfahren müssen die vorher zugeschnittenen Folien in die Spritzgießform eingelegt werden. Eine rationelle Fertigung ist daher mit diesen Verfahren nicht möglich.

Bei einem in der US-PS-4,369,157 angegebenen Verfahren zum Aufbringen mehrerer Schichten auf ein Objekt wird eine Trägerfolie mit den verschiedenen Schichten von einer Rolle abgezogen, ein Abschnitt derselben in eine Spritzgießform eingelegt und dann hinterspritzt. Nach dem Formprozeß und dem Öffnen der Form wird die Trägerfolie von dem Spritzgießteil getrennt. Es ist jedoch keine Antirutschschicht vorhanden und es sind auch keine Angaben über die Schichtdicke der Folien oder über den Reibungskoeffizienten einer Antirutschschicht gemacht.

In einer ähnlichen Weise arbeitet ein aus der JP 63-120616 (A) bekanntes Verfahren. Bei diesem Verfahren sind die aufzubringenden Schichten in der benötigten Form und Größe abschnittsweise auf einer Trägerfolie vorgesehen. Auch hier sind keinerlei Angaben zu Antirutschschichten zu finden.

Ein ähnlich arbeitendes Verfahren, bei dem die beschichtete Trägerfolie vor dem Spritzgießvorgang zunächst erhitzt und beim Spritzgießvorgang oder vorher tiefgezogen wird und nach dem Spritzgießvorgang die Trägerfolie abgezogen wird, ist aus der JP-58-132529 (A) bekannt. Angaben über Antirutschschichten sind hier ebenfalls nicht gemacht.

Durch die Erfindung soll die Aufgabe gelöst werden, ein Verfahren mit den Merkmalen des Oberbegriffes des Anspruchs 1 so auszugestalten, daß ein Auflage- oder Unterlageteil, insbesondere ein Kunststofftablett, mit ein Rutschen aufgesetzter Gegenstände hindernden Eigenschaften seiner Bodenoberfläche vergleichsweise rasch und kostensparend derart hergestellt werden kann, daß dessen Rutschfestigkeit erhöht und bei häufigem Gebrauch eine mehrfache Wiederverwendung auch nach intensiver Reinigung möglich ist.

Diese Aufgabe wird durch die Merkmale des Anspruchs 1 gelöst.

Vorteilhafte Ausgestaltungen des beanspruchten Verfahrens sowie eine Einrichtung zur Durchführung des Verfahrens und ein damit hergestelltes Auflage- oder Unterlageteil sind in den dem Anspruch 1 nachgeordneten bzw. nebengeordneten Patentansprüchen gekennzeichnet.

Die vorliegend angegebene Verfahrenweise beim Spritzen oder Spritzgießen von Auflage- oder Unterlageteilen, insbesondere von Kunststofftabletts, kann als Anwendung der an sich bekannten Inmould-Dekoration von Spritzgießteilen auf Formkörpern verstanden werden. Es hat sich gezeigt, daß der sich aus der Form des Auflage- oder Unterlageteils beim Schließen der Formhälften der Spritzgießmaschine ergebende Bedarf an bei diesem Arbeitstakt ungenutzter Länge von Träger und darauf angeordnetem Längenstück oder Zuschnitt von zu hinterspritzendem, das Rutschen hinderndem Folienmaterial weder die exakte Positionierung des Zuschnittes, der Zuschnitte oder der Abschnitte dieses Folienmaterials im Bereich der Bodenoberfläche des Auflage- oder Unterlageteiles in Frage stellt, noch zur Schwierigkeit beim Ablösen des Trägers nach dem Spritzgießvorgang führt.

Weiter hat sich gezeigt, daß die im Gebrauch des Auflage- oder Unterlageteiles freiliegenden Übergangsbereiche zwischen nicht mit hinterspritzter Folie versehenen Oberflächenbereichen und der hinterspritzten Folie gegenüber den bei intensiver Reinigung wirksamen Beanspruchungen mechanischer und chemischer Art standhalten.

Eine nach Ausformung des Auflage- oder Unterlageteiles freiliegende Oberfläche oder Bereiche dieser Oberfläche des Bodens dieser Teile kann bzw. können strukturiert sein, ohne daß der entsprechende Teil einer Formhälfte der Spritzgießmaschine mit hohem Kostenaufwand mit einer Strukturierung versehen werden muß, da strukturierte Folien verwendet werden können, die in einer in vorstehendem Sinne mit glatten Flächen ausgestatteten Spritzgießform hinterspritzt werden können.

Die ein Rutschen hindernde Schicht kann entweder selbst die Form einer Vielzahl von Zuschnitten informationshaltiger Gestalt, beispielsweise die Gestalt von Schriftzügen, haben oder es können in der Schicht durch die Oberfläche hindurch sichtbare Bereiche mit Informationsinhalt von kontrastierender Farbgebung eingelagert sein.

Nachfolgend werden Ausführungsbeispiele anhand der Zeichnung im einzelnen beschrieben. Es stellen dar:
- Fig. 1: eine schematische, teilweise im Schnitt gezeichnete Einrichtung zur Herstellung eines Auflage- oder Unterlageteiles, nämlich eines Kunststofftabletts, unter Verwendung des Inmould-Verfahrens;
- Fig. 2: eine Aufsicht auf ein Trägerband mit darauf angeordneten Zuschnitten der Schicht aus ein Rutschen hinderndem Material;
- Fig. 3: eine perspektivische Ansicht eines unter Verwendung eines Trägers gemäß Fig. 2 hergestellten Kunststofftabletts;
- Fig. 4: eine Aufsicht auf einen Träger mit einer darauf befindlichen durchgehenden Schicht aus ein Rutschen hinderndem Material;
- Fig. 5: eine perspektivische Ansicht eines unter Verwendung eines Trägers nach Fig. 4 hergestellten Kunststofftabletts;
- Fig. 6: einen vergrößerten Abschnitt eines beschichteten Trägerbandes, positioniert zwischen zwei Formhälften einer Spritzgießform und
- Fig. 7: einen vergrößerten Abschnitt mit Hinterspritzung der Schicht.

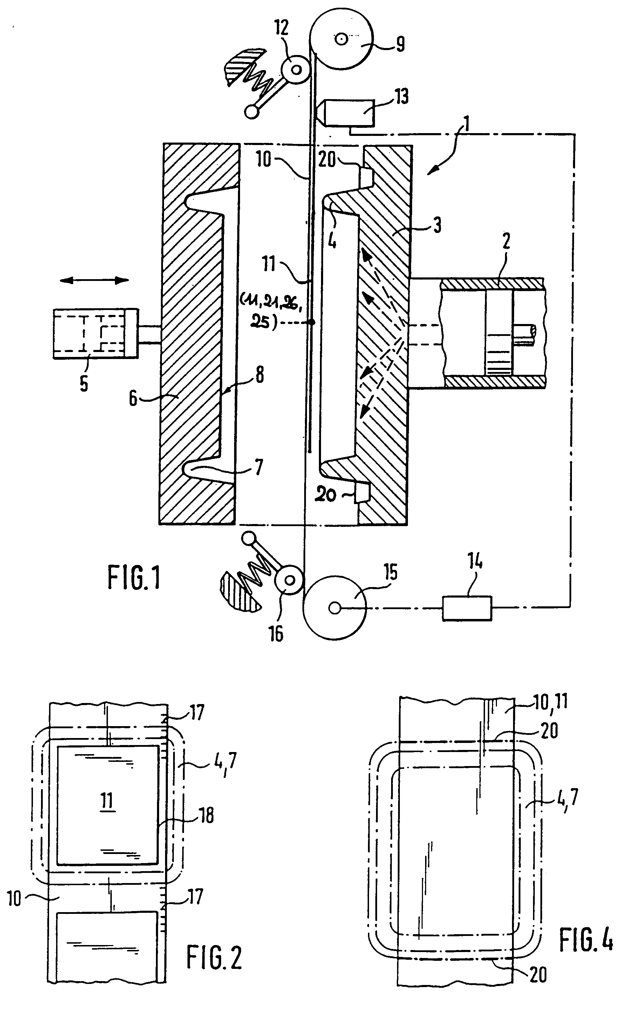

Figur 1 zeigt eine Spritzgießmaschine 1 mit einer an eine Presse 2 angeschlossenen Formhälfte 3, die auf der dem Formhohlraum zugekehrten Seite entsprechend der Gestalt der Tablettunterseite profiliert ist. Ein an dieser Form rundum laufender, beispielsweise in axialer Richtung rechteckig verlaufender Wulst 4 entspricht der hohlen Ausbildung des Randes des herzustellenden Tabletts.

Auf die Formhälfte 3 hin in Schließstellung bzw. von der Formhälfte 3 weg in Öffnungsstellung gemäß Fig. 1 mittels eines Antriebs 5 bewegbar ist die Formhälfte 6, welche eine dem umlaufenden Wulst 4 der Formhälfte 3 entsprechende und gegenüberstehende Rille 7 und ein von dieser umgrenztes Plateau 8 aufweist.

Auf der Seite des Spaltes zwischen den geöffneten Formhälften 3, 6 oberhalb der Spritzgießmaschine 1 befindet sich ein mit einer Bremsvorrichtung versehener Haspel 9, auf dem sich ein Vorrat eines Trägerbandes 10 mit darauf angeordneten Zuschnitten von Folienmaterial aus einer Schicht 11 befindet, wobei jeweils ein Zuschnitt oder jeweils Gruppen von Zuschnitten der Schicht 11 so dimensioniert und angeordnet sind, daß sie jeweils innerhalb der von dem Plateau 8 bestimmten Fläche mit Bezug auf die Axialrichtung fluchtend positioniert werden können.

Die Zuschnitte der Schicht 11 können flächenmäßig so bemessen sein, daß sie innerhalb der Umgrenzung der Bodenfläche 22 des fertigen Kunststofftabletts K Platz finden.

Die Schicht 11 besteht aus einem Material, das gegenüber Kunststoff und/oder Keramik und/oder Metall einen Reibungskoeffizienten von größer als 0,2, insbesondere größer als 10 besitzt. Vorzugsweise besteht diese Schicht aus Polyurethan (PU) oder sie besitzt dieses Material als Ausgangsbasis. Die Schichtdicke beträgt etwa 10µm bis 100µm.

Dem Haspel 9 ist eine federbelastete Spannrolle 12 zugeordnet und weiter wird die Anordnung oberhalb der Spritzgießmaschine 1 durch eine Detektoreinrichtung 13 vervollständigt, welche auf dem Trägerband 10 angeordnete Marken 17 zur Steuerung der Positionierung des Trägerbandes 10 bzw. der Abschnitte aus der Schicht 11 dient.

Auf der gegenüberliegenden Seite des Spaltes zwischen den geöffneten Formhälften 3, 6 unterhalb der Spritzgießmaschine 1 befindet sich ein mit einem steuerbaren Antrieb 14 gekuppelter Aufnahmehaspel 15 zur Aufnahme des nach Ablösung von dem auszuformenden Kunststofftablett K abgelösten, freiwerdenden Trägerbandes 10, sowie eine weitere federbelastete Spannrolle 16.

Bei der Herstellung eines Kunststofftabletts K wird in der hier angegebenen Weise folgendermaßen verfahren:

Zunächst wird von dem Haspel 9 gegen dessen Bremsvorrichtung mittels des Aufnahmehaspels 15 ein ungebrauchtes Längenstück des Trägerbandes 10 mit einem darauf befindlichen Abschnitt der Schicht 11 des ein Rutschen hindernden Materials durch Betätigen des Antriebs 14 abgezogen und unter Steuerung des Antriebs 14 durch die Marken 17 des Trägerbandes 10 (Fig. 2) abtastenden Detektors 13 so positioniert, daß sichergestellt ist, daß nach dem Schließen der Formhälften 3, 6 und dem Eindringen des Wulstes 4 in die Rille 7 der Abschnitt der Schicht 11 in Axialrichtung mit dem Plateau 8 der Formhälfte 6 fluchtet, wobei die Berandung des Abschnittes gewünschtenfalls rundum gleichmäßigen Abstand von der Randkante des Plateaus 8 haben kann und folglich am fertigen Kunststofftablett K die ein Rutschen hindernde Schicht entsprechenden Abstand vom Übergang der Tablett-Bodenoberfläche zu dem Tablettrand hat.

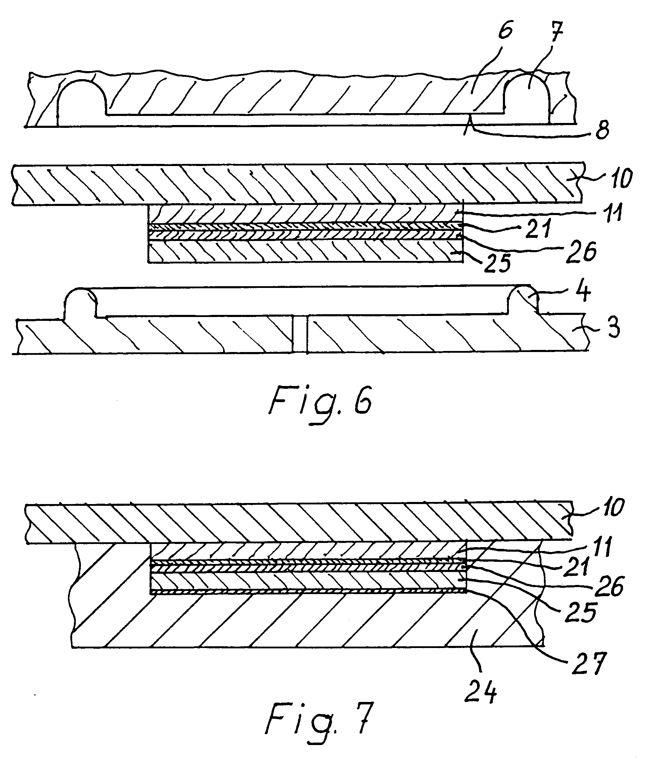

Dann wird die Presse 2 betätigt und der zwischen den geschlossenen Formhälften 3, 6 gebildete Formhohlraum mit Kunststoff ausgespritzt, wobei die Schicht 11 hinterspritzt wird. Die Schicht 11 trägt bevorzugt noch eine auf der der Formhälfte 3 zugekehrten Seite befindliche Haftvermittlerschicht 21 (Fig.6 und 7), welche die innige Verbindung zwischen der Schicht 11 und der in den Formhohlraum eintretenden Kunststoffschicht oder weiterer Zwischenschichten verbessert.

Nun wird die Form wieder geöffnet, eine in der Zeichnung nicht dargestellte Ausstoßvorrichtung betätigt und das fertiggestellte Kunststofftablett K zusammen mit der auf seiner Bodenoberfläche befindlichen, hinterspritzten, rutschhemmenden Schicht 11 von dem Trägerband 10 abgelöst und das Kunststofftablett K aus der Einrichtung entnommen. Dann wird mittels des Antriebs 14 und des Haspels 15 ein neuer Abschnitt des Trägerbandes 10 durch Aufwickeln des gebrauchten Trägerbandstückes in die Spritzgießmaschine 1 gezogen und der Arbeitsvorgang wird wiederholt.

Man erkennt aus Fig. 2, daß die einzelnen Abschnitte der Schicht 11 auf dem Trägerband 10 bei diesem Ausführungsbeispiel einen bestimmten Abstand in Laufrichtung des Trägerbandes 10 durch die Einrichtung voneinander haben, derart, daß Stanzvorgänge in der Einrichtung nicht erforderlich sind. Entsprechendes gilt, wenn anstelle eines die Schicht 11 bildenden Abschnittes innerhalb der in Fig. 2 angedeuteten Umgrenzung 18 eine Vielzahl von geometrischen Gebilden, beispielsweise Punkten, Sternen, Buchstaben, Schriftzügen und dergleichen auf dem Trägerband 10 angebracht sind.

Daß das Trägerband 10 für die Durchführung des Verfahrens geeignete Hitzebeständigkeit, Formbeständigkeit, Hafteigenschaften zur Schicht 11 und Trennungseigenschaften hiervon haben muß, sei nur der Vollständigkeit halber erwähnt. Vorzugsweise besteht das Trägerband 10 aus Polyäthylen (PE) oder Polyvinylchlorid (PVC). Es besitzt bevorzugt eine Dicke von etwa 15µm bis 300µm, insbesondere von etwa 30µm bis 150µm.

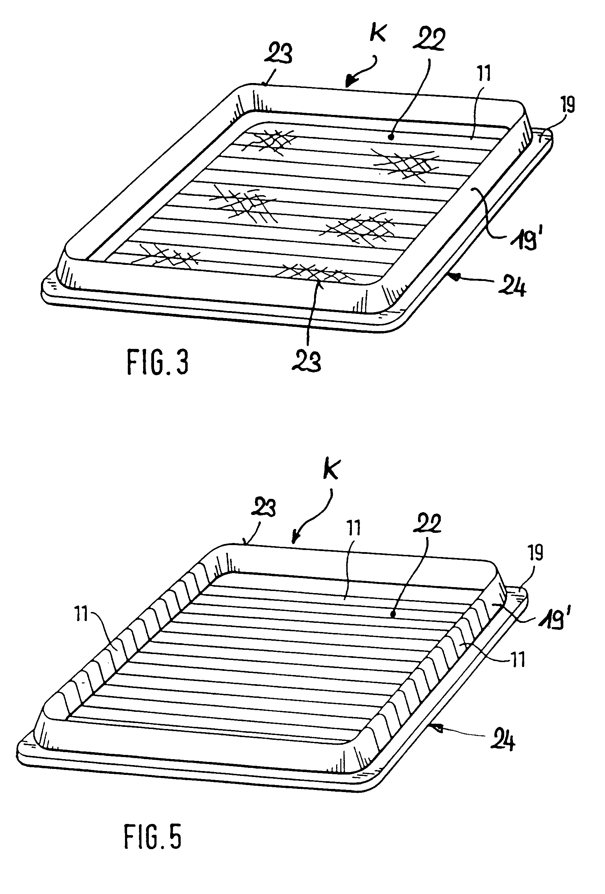

Ein unter Verwendung des Trägerbandes 10 nach Fig. 2 in der Einrichtung nach Fig. 1 erzeugtes Kunststofftablett K ist perspektivisch in Fig. 3 gezeigt. Es hat außerhalb des Randwulstes 19' einen rundum laufenden schmalen Randflansch 19, dessen Ausbildung aufgrund der Formgebung der Formhälften 3, 6 für den Fachmann verständlich ist. Innerhalb des Randwulstes 19' liegt auf der Tablett-Bodenoberfläche 22 in inniger Verbindung mit dem Spritzgießwerkstoff die Schicht 11, welche auf der nun vom Trägerband 10 befreiten Oberfläche selbst glatt oder strukturiert sein kann und auch einen Dekoraufdruck oder eine Dekoreinlagerung durch eine transparente Oberflächenlage hindurch sichtbar werden lassen kann. Mit der Ziffer 23 sind die zur Trägerbandförderrichtung parallelen Ränder des Kunststofftabletts K bezeichnet.

Mit einer in Fig. 1 ebenfalls gezeigten Abwandlung ist die Spritzgießmaschine 1 auch zur Verarbeitung von Trägern gemäß Fig. 4 geeignet, welche eine durchgehende, also beispielsweise endlose Schicht 11 aus ein Rutschen hinderndem Material aufweist. Mit einem solchen Trägerband 10 lassen sich Kunststofftabletts K der in Fig. 5 perspektivisch dargestellten Art herstellen. Bei solchen Kunststofftabletts K ist die ein Rutschen hindernde Schicht 11 auf zwei einander gegenüberliegenden Seiten über den Randwulst 19' hinweg und bis zum Ende des rundum laufenden Flansches bzw. Randflansches 19 gezogen. Zum Abtrennen von Abschnitten von der durchgehend oder endlos aufgebrachten Schicht 11 aus dem ein Rutschen hindernden Material dienen Schneidkanten 20 an mindestens zwei Seiten der Formhälfte 3 im Bereich des Außenrandes des für den Randflansch 19 vorgesehenen Formhohlraumes, wobei die Höhe der Schneidkanten 20 so bemessen ist, daß sie beim Schließen der Formhälften 3, 6 nur die Schicht 11, nicht aber das Trägerband 10 durchtrennt, da dieses für den Weitertransport der Schicht 11 oder der Abschnitte der Schicht 11 mittels des angetriebenen Aufnahmehaspels 15 benötigt wird.

Wird eine Gestalt und ein Erscheinungsbild des fertigen Kunststofftabletts K nach Fig. 5 gewünscht, so hat diese Ausführungsform den Vorteil, daß der Vorgang der Positionierung des zwischen den Haspeln 9, 15 zu transportierenden Schichtenverbandes vor dem Schließen der Form verhältnismäßig unkritisch ist.

Ohne die Gebrauchseigenschaften des durch Spritzgießen erzeugten Kunststofftabletts K hinsichtlich mechanischer Festigkeit und Reinigung sowie Wiederverwendbarkeit gegenüber einem Gegenstand aus einem einzigen Material zu verschlechtern, gestatten die mit der Schicht 11 ausgebildeten Kunststofftabletts K einen störungsfreien Betrieb beim Servieren, während der Mahlzeit und beim Abservieren in Transportmitteln, insbesondere Flugzeugen, Speisewagen und Omnibussen.

Die Beschreibung der Schicht 11 mit ein Rutschen aufgestellter Gegenstände "hindernden" Eigenschaften bedeutet nicht, daß ein Rutschen auch bei extremen Benutzungssituationen völlig ausgeschlossen ist. Wichtig ist vielmehr, daß gegenüber den eingangs beschriebenen vorbekannten Tabletts mit rutschhemmenden Eigenschaften die Rutschfestigkeit deutlich erhöht ist. Ein Maß für die Rutschfestigkeit ist der Reibungskoeffizient der verwendeten Schicht 11. Bevorzugt werden demgemäß Schichten 11 aus Kunststoff verwendet, die einen Reibungskoeffizienten höher bzw. deutlich höher als 0,2, beispielsweise 10 oder noch höher, besitzen.

Als Kunststoffmaterialien für den Tablettkörper 24 kommen insbesondere Acrylbutadien-Styrol (ABS), Styrol-Acryl-Nitril (SAN), Polypropylen (PP), Polycarbonat (PC) oder Polyamid (PA) in Betracht.

Als Material für die Schicht 11, die bevorzugt nur eine Dicke von 10µm bis 100µm besitzt, kommen insbesondere Folien in Betracht, die mit dem jeweiligen Material des Tablettkörpers 24 verträglich sowie dauerhaft und unlösbar verbindbar sind.

Zur Herstellung von Kunststofftabletts K mit einem an der Bodenoberfläche sichtbaren Dekor wird anstelle der Schicht 11 eine Schichtfolge gemäß Fig. 6 oder 7 verwendet.

Beim Ausführungsbeispiel gemäß Fig. 6 wird eine beispielsweise 10µm bis 500µm dicke Dekorträgerfolie 25 mit einem Dekor 26 gewünschter Art versehen. Das Dekor 26 kann ein oder mehrfarbig ausgebildet und beispielsweise im Sieb-, Offset- oder Rotationsdruckverfahren bedruckt sein.

Anschließend wird, vorzugsweise vor dem Erhärten, Trocknen oder Auspolymerisieren des Dekormaterials 26, ein Haftvermittler 21 aus durchscheinendem oder duchsichtigem Material, beispielsweise ein wasserlöslicher Kleber auf einer Zweikomponentenbasis aufgebracht.

Auf den Haftvermittler 21 wird dann die Schicht 11 aus ebenfalls durchscheinendem oder durchsichtigem Material aufgebracht und zwar vorteilhaft bevor der Haftvermittler 21 seine Endkonsistenz erreicht hat.

Die Dekorträgerfolie 25 besteht bevorzugt aus einem Material, das sich gut und dauerhaft mit dem Material des Tablettkörpers 24 verbindet. Vorzugsweise enthält das Material der Dekorträgerfolie 25 einen wenigstens geringen Anteil des gleichen Materials, aus dem der Tablettkörper 24 besteht oder auf der Basis desselben. Bevorzugte Materialien für die Dekorträgerfolie 25 sind Acrylbutadien-Styrol (ABS), Polycarbonat (PC) oder Polystyrol (PS).

Gegebenenfalls kann es zweckmäßig sein, auf die Oberfläche der Dekorträgerfolie 25, auf die die Hinterspritzung des Tablettkörpers 24 aufgebracht wird, einen Haftvermittler 27 vorzusehen, wie in Fig. 7 veranschaulicht.

Der Haftvermittler 27 besteht aus Kunststoff, vorzugsweise aus oder auf der Basis eines Materials oder mehrerer der Materialien Acrylbutadien-Styrol (ABS), Styrol-Acryl-Nitril (SAN), Polycarbonat (PC), Polyamid (PA), Polyurethan (PUR) oder Silikon (SI).

Die Schichtfolge 11, 21, 26, 25 wird auf das Trägerband 10 leicht abziehbar aufgebracht. Vorzugsweise erfolgt dies, solange die Schicht 11 noch nicht ausgehärtet oder noch nicht vollständig polymerisiert ist oder sich in einem weichelastischen Zustand befindet. Die Haftung erfolgt hier durch freie Nebenvalenzen des Trägerbandes 10 und der Schicht 11 und - vorzugsweise überwiegend - durch Adhäsionskräfte.

Auch wenn die vorliegende Erfindung bevorzugt für die Herstellung von Kunststofftabletts näher beschrieben worden ist, sind das erfindungsgemäße Verfahren und die Einrichtung zur Durchführung dieses Verfahrens auch für andere Auflage- oder unterlageteile beliebiger Art mit einer rutschfesten Stellfläche - insbesondere auch ohne einen die Außenbegrenzung bewirkenden hochragenden Rand - anwendbar. In diesem Zusammenhang sei insbesondere auf Auflage- oder Unterlageteile mit rutschfester Stellfläche verwiesen, wie sie für Armaturentafelablagen, Toiletteartikel im Griffbereich oder für rutschfeste Tastaturen eingesetzt werden.

## Patentansprüche

1. Verfahren zur Herstellung eines Auflage- oder Unterlageteiles (K), insbesondere eines Kunststofftabletts, das eine ebene Bodenoberfläche (22) und gegebenenfalls einen an dessen Außenbegrenzung hochragenden Rand (23) aufweist, wobei die Bodenoberfläche (22) des Auflage- oder Unterlageteiles (K) ganz oder teilweise mit einer Schicht (11) versehen wird, die dadurch hergestellt wird, daß eine auf einem Trägerband (10) aufgebrachte Schicht (11) mit dem Trägerband (10) in die Spritzgießform (3, 6) eingeführt oder eingelegt wird und bei der Herstellung des Auflage- oder Unterlageteiles (K) die Schicht (11) durch einen Spritz- oder Spritzgießvorgang mit einer polymeren Masse hinterspritzt und die Schicht (11) mit der polymeren Masse verbunden wird und nach dem Aushärten der polymeren Masse und dem Entformen des Auflage- oder Unterlageteiles (K) das Trägerband (10) von der Schicht (11) abgezogen wird, dadurch gekennzeichnet, daß als Material für die Schicht (11) ein gegenüber Kunststoff und/oder Keramik und/oder Metall einen Reibungskoeffizienten von mindestens 0,2 aufweisendes Material verwendet wird, das auf dem Trägerband (10) in Form einer zusammenhängenden, mit Durchbrüchen oder mit Unterbrechungen versehenen Schicht (11) endlos oder abschnittsweise aufgebracht wird.

2. Verfahren nach Anspruch 1, dadurch gekennzeichnet, daß auf dem Trägerband (10) innerhalb der Begrenzung der Bodenoberfläche (22) des fertigen Auflage- oder Unterlageteiles (K) Platz findende Schichtabschnitte aufgebracht und diese in der Spritzgießform (3, 6) entsprechend positioniert und hinterspritzt werden.

3. Verfahren nach Anspruch 1 oder 2, dadurch gekennzeichnet, daß auf eine Dekorträgerfolie (25) ein Dekor (26) aufgebracht, insbesondere aufgedruckt oder aufgerollt wird, daß auf das Dekor (26) und eventuell auf von diesem frei bleibenden Flächen der Dekorträgerfolie (25) eine durchscheinende oder durchsichtige Haftvermittlerschicht (21) und auf diese eine durchscheinende oder durchsichtige Schicht (11) aufgebracht wird, und daß dann diese Schichtfolge (11, 21, 26, 25) mit der Oberfläche der Schicht (11) mit dem Trägerband (10) leicht lösbar verbunden wird.

4. Verfahren nach Anspruch 3, dadurch gekennzeichnet, daß der Haftvermittler (21) auf das noch nicht ausgehärtete oder noch nicht auspolymerisierte oder noch nicht ausgetrocknete Dekor (26) aufgebracht wird.

5. Verfahren nach Anspruch 4, dadurch gekennzeichnet, daß als Ausgangsmaterial für den Haftvermittler (21) ein wasserlöslicher Zweikomponentenkleber verwendet wird.

6. Verfahren nach einem der Ansprüche 1 bis 5, dadurch gekennzeichnet, daß das Trägerband (10) im noch nicht ausgehärtetem oder noch nicht vollständig polymerisiertem oder in einem noch warmelastischen Zustand der Schicht (11) mit dieser verbunden wird.

7. Verfahren nach Anspruch 6, dadurch gekennzeichnet, daß ein Trägerband (10) aus oder auf der Basis von Polyäthylen (PE) oder Polyvinylchlorid (PVC) verwendet wird.

8. Verfahren nach Anspruch 7, dadurch gekennzeichnet, daß ein Trägerband (10) mit einer Banddicke von etwa 15µm bis 300µm, insbesondere von etwa 30µm bis 150µm, verwendet wird.

9. Verfahren nach einem der Ansprüche 1 bis 8, dadurch gekennzeichnet, daß eine Dekorträgerfolie (25)aus oder auf der Basis von Acrylbutadien-Styrol (ABS), Polycarbonat (PC) oder Polystyrol (PS) mit einer Folienstärke von etwa 10µm bis 500µm, insbesondere bis etwa 150µm, verwendet wird.

10. Verfahren nach einem der Ansprüche 1 bis 9, dadurch gekennzeichnet, daß eine Dekorträgerfolie (25) verwendet wird, die einen Materialanteil enthält, der aus dem für die Hinterspritzung (24) verwendeten Material besteht.

11. Verfahren nach einem der Ansprüche 1 bis 10, dadurch gekennzeichnet, daß die Schicht (11) in einer Schichtdicke von etwa 10µm bis 100µm verwendet wird.

12. Verfahren nach einem der Ansprüche 1 bis 11, dadurch gekennzeichnet, daß eine Schicht (11) aus oder auf der Basis von Polyurethan (PUR) verwendet wird.

13. Verfahren nach einem der Ansprüche 1 bis 12, dadurch gekennzeichnet, daß eine endlose Schicht (11) oder Schichtfolge (11, 21, 26, 25) von solcher Größe verwendet wird, deren Flächenausdehnung ein- oder mehrseitig über den zu fertigenden Auflage- oder unterlageteil (K) übersteht und daß aus dieser Schicht (11) oder Schichtfolge (11, 21, 26, 25) vor oder nach dem Hinterspritzen mit der polymeren Masse ein kleinerer Ausschnitt durch eine im Spritzgießwerkzeug (3, 6) vorgesehene Schneideinrichtung (20) ohne Durchtrennung des Trägerbandes (10) abgetrennt wird.

14. Verfahren nach einem der Ansprüche 1 bis 13, dadurch gekennzeichnet, daß zum Hinterspritzen der Schicht (11) bzw. der Schichtfolge (11, 21, 26, 25) Acrylbutadien-Styrol (ABS), Styrol-Acryl-Nitril (SAN) oder Polycarbonat (PC) verwendet wird.

15. Auflage- oder Unterlageteil (K), insbesondere Kunststofftablett, das eine ebene Bodenoberfläche (22) und gegebenenfalls einen an dessen Außenbegrenzung hochragenden Rand (23) aufweist, wobei die Bodenoberfläche (22) ganz oder teilweise mit einer Schicht (11) versehen ist, die dadurch hergestellt ist, daß eine auf einem Trägerband (10) aufgebrachte Schicht (11) mittels des Trägerbandes (10) in die Spritzgießform (3, 6) eingeführt und bei der Herstellung des Auflage- oder Unterlageteiles (K) die Schicht (11) durch einen Spritz- oder Spritzgießvorgang mit einer polymeren Masse hinterspritzt ist und nach deren Aushärtung und Entformung das Trägerband (10) von der Schicht (11) abgezogen ist, hergestellt nach dem Verfahren nach einem der Ansprüche 1 bis 14 und gegebenenfalls hergestellt mit einer Einrichtung nach einem der Ansprüche 15 bis 18, dadurch gekennzeichnet, daß die Schicht (11) bzw. die Schichtfolge (11, 21, 26, 25) aus einem gegenüber Kunststoff und/oder Keramik und/oder Metall einen Reibungskoeffizienten von mindestens 0,2 aufweisenden Material besteht, das Durchbrüche oder Unterbrechungen aufweist und innerhalb der parallelen Ränder (23) des Auflage- oder Unterlageteiles (K) angebracht ist.

16. Auflage- oder Unterlageteil, insbesondere Kunststofftablett, hergestellt nach einem der Verfahrensansprüche 1 bis 14, dadurch gekennzeichnet, daß die Schicht (11) oder Schichtfolge (11, 21, 26, 25) zumindest auf zwei einander gegenüberliegenden Seiten des Auflage- oder Unterlageteiles (K) auch auf den parallelen Rändern (23) angebracht ist.

17. Auflage- oder Unterlageteil nach Anspruch 15 oder 16, dadurch gekennzeichnet, daß zwischen der Schicht (11) und dem hinterspritzten Körper (24) -(polymere Masse) - eine Haftvermittlerschicht (27) vorgesehen ist.

18. Auflage- oder unterlageteil nach einem der Ansprüche 15 bis 17, dadurch gekennzeichnet, daß der hinterspritzte Körper (24) aus Kunststoff aus oder auf der Basis eines oder mehrerer der Verbindungen Acrylbutadien-Styrol (ABS), Styrol-Acryl-Nitril (SAN), Polypropylen (PP), Polycarbonat (PC) oder Polyamid (PA) besteht.

19. Auflage- oder unterlageteil nach Anspruch 17 oder 18, dadurch gekennzeichnet, daß die Haftvermittlerschicht (27) aus Kunststoff aus oder auf der Basis eines oder mehrerer der Verbindungen Acrylbutadien-Styrol (ABS), Styrol-Acryl-Nitril (SAN), Polycarbonat (PC), Polyamid (PA), Polyurethan (PUR) oder Silikon (SI) besteht.

20. Auflage- oder unterlageteil nach einem der Ansprüche 15 bis 19, dadurch gekennzeichnet, daß auf dem hinterspritzten Körper (24) nacheinander folgende Schichten vorgesehen sind:
- eine Dekorträgerfolie (25);
- ein Dekor (26);
- eine Haftvermittlerschicht (21) aus durchscheinendem oder durchsichtigem Material;
- die das Rutschen hemmende Schicht (11) aus durchscheinendem oder durchsichtigem Material.

21. Auflage- oder Unterlageteil nach Anspruch 20, dadurch gekennzeichnet, daß das Material der Dekorträgerfolie (25) einen Anteil eines solchen Materials enthält, aus dem der hinterspritzte Körper (24) ganz oder zum wesentlichen Teil besteht oder der für den hinterspritzten Körper (24) als Basis verwendet ist.

22. Auflage- oder Unterlageteil nach Anspruch 20, dadurch gekennzeichnet, daß eine Haftvermittlerschicht (27) zwischen dem hinterspritzten Körper (24) und der Dekorträgerfolie (25) vorgesehen ist.

23. Auflage- oder Unterlageteil nach einem der Ansprüche 15 bis 22, dadurch gekennzeichnet, daß die Schicht (11) eine Dicke von etwa 10µm bis 100µm besitzt.

24. Auflage- oder Unterlageteil nach einem der Ansprüche 15 bis 23, dadurch gekennzeichnet, daß die Schicht (11) aus Polyurethan (PUR) oder auf der Basis von Polyurethan (PUR) besteht.

25. Auflage- oder unterlageteil nach einem der Ansprüche 20 bis 24, dadurch gekennzeichnet, daß die Dekorträgerfolie (25) aus oder auf der Basis von Acrylbutadien-Stryrol (ABS), Polycarbonat (PC) oder Polystyrol (PS) besteht.

26. Auflage- oder Unterlageteil nach einem der Ansprüche 20 bis 25, dadurch gekennzeichnet, daß die Dicke der Dekorträgerfolie (25) etwa 10µm bis 500µm, insbesondere bis etwa 150µm, beträgt.

## Claims

1. A method of production of a part (K) as overlay or underlay,
especially a tray of plastics exhibiting a plane bottom surface (22) and if the occasion arises, a raised edge (23) round its outer boundary, the bottom surface (22) of the overlay or underlay (K) being provided over all or some of it with a coating (11) produced by a coating (11) applied to a carrier belt (10) being introduced into or laid in the injection mould (3, 6) by the carrier belt (10), the coating (11) during the production of the overlay or underlay (K) being backed with a polymeric mass by a process of injection or injection-moulding during which the coating (11) is bonded to the polymeric mass and after the setting of the polymeric mass and removal of the overlay or underlay (K) from the mould the carrier belt (10) is withdrawn from the coating (11),
characterized in that
as material for the coating (11) a material is employed which exhibits with respect to plastics and/or ceramic and/or metal a coefficient of friction of at least 0.2 and is applied endlessly or in sections to the carrier belt (10) in the form of a cohesive coating (11) provided with apertures or interruptions.

2. A method as in Claim 1, characterized in that
sections of coating are applied to the carrier belt (10) to find room within the boundary of the bottom surface (22) of the finished overlay or underlay (K), and are then positioned in the injection mould (3, 6) to correspond and backed by injection.

3. A method as in Claim 1 or 2, characterized in that
a decoration (26) is applied to a decoration-carrier foil (25), in particular printed or rolled onto it, that to the decoration (26) and possibly to areas which remain free of the latter on the decoration-carrier foil (25) a coating (21) of translucent or transparent adhesive is applied and to this in turn a translucent or transparent coating (11), and that then this sequence of coatings (11, 21, 26, 25) is connected by the surface of the coating (11) to the carrier belt (10) in a way that lets them be easily detached from one another.

4. A method as in Claim 3, characterized in that
the adhesive (21) is applied to the not yet hardened or not yet polymerized or not yet dried decoration (26).

5. A method as in Claim 4, characterized in that
as starting material for the adhesive (21) a water-soluble two-component glue is employed.

6. A method as in one of the Claims 1 to 5, characterized in that
in the not yet hardened or not yet completely polymerized or in a still hot-elastic state of the coating (11) the carrier belt (10) is connected to it.

7. A method as in Claim 6, characterized in that
the carrier belt (10) employed is one of or on the basis of polyethylene (PE) or polyvinylchloride (PVC).

8. A method as in Claim 7, characterized in that
the carrier belt (10) employed is one of which the belt thickness is from about 15µm to 300µm, especially from about 30µm to 150 µm.

9. A method as in one of the Claims 1 to 8, characterized in that
the decoration-carrier foil (25) employed is one of or on the basis of acrylbutadiene-styrene (ABS), polycarbonate (PC) or polystyrene (PS) and of which the foil thickness is from about 10µm to 500µm, especially to about 150 µm.

10. A method as in one of the Claims 1 to 9, characterized in that
the decoration-carrier foil (25) employed is one which contains a proportion of material which consists of the material employed for the backing (24) by injection.

11. A method as in one of the Claims 1 to 10, characterized in that
the coating (11) employed is one of a thickness of coating from about 10µm to 100 µm.

12. A method as in one of the Claims 1 to 11, characterized in that
the coating (11) employed is one of or on the basis of polyurethane (PUR).

13. A method as in one of the Claims 1 to 12, characterized in that
an endless coating (11) or sequence of coatings (11, 21, 26, 25) is employed of a size such that its superficial extent reaches out on one or more sides beyond the finished overlay or underlay (K) and that from this coating (11) or sequence of coatings (11, 21, 26, 25) before or after the backing by injection with the polymeric mass a smaller piece is separated by a cutter device (20) provided in the injection moulding tool (3, 6) without severing the carrier belt (10).

14. A method as in one of the Claims 1 to 13, characterized in that
for backing the coating (11) or sequence of coatings (11, 21, 26, 25) by injection, acrylbutadiene-styrene (ABS), stylene-acryl-nitrile (SAN) or polycarbonate (PC) is employed.

15. An overlay or underlay (K), especially a tray of plastics which
exhibits a plane bottom surface (22) and if the occasion arises, a raised edge (23) round its outer boundary, and in which the bottom surface (22) is provided over all or some of it with a coating (11) produced by a coating (11) applied to a carrier belt (10) being introduced into the injection mould (3, 6) by means of the carrier belt (10), the said coating (11) during production of the overlay or underlay (K) being backed with a polymeric mass by an injection or injection-moulding process, and after the coating has set and been removed from the mould the carrier belt (10) is withdrawn from the coating (11), the overlay or underlay (K) being produced according to the method as in one of the Claims 1 to 14 and if necessary produced by a device as in one of the Claims 15 to 18, characterized in that
the coating (11) or sequence of coatings (11, 21, 26, 25) consists of a material which exhibits with respect to plastics and/or ceramic and/or metal a coefficient of friction of at least 0.2 and exhibits apertures or interruptions and is applied within the parallel edges (23) of the overlay or underlay (K).

16. An overlay or underlay, especially a tray of plastics produced
according to one of the method Claims 1 to 14, characterized in that the coating (11) or sequence of coatings (11, 21, 26, 25) is applied to at least two sides of the overlay or underlay (K) lying opposite one another and also to the parallel edges (23).

17. An overlay or underlay as in Claim 15 or 16, characterized in that
between the coating (11) and the body (24) backed by injection -(polymeric mass)- a coating (27) of adhesive is provided.

18. An overlay or underlay as in one of the Claims 15 to 17,
characterized in that
the body (24) of plastics backed by injection consists of or on the basis of one or more of the compounds acrylbutadiene-styrene (ABS), styrene-acryl-nitrile (SAN), polypropylene (PP), polycarbonate (PC), or polyamide (PA).

19. An overlay or underlay as in Claim 17 or 18,
characterized in that
the coating (27) of adhesive consists of plastics of or on the basis of one or more of the compounds acrylbutadiene-styrene (ABS), styrene-acrylnitrile (SAN), polycarbonate (PC), polyamide (PA), polyurethane (PUR) or silicone (SI).

20. An overlay or underlay as in one of the Claims 15 to 19,
characterized in that
upon the body (24) backed by injection successive layers are provided:
- a decoration-carrier foil (25);
- a decoration (26);
- a coating (21) of adhesive of translucent or transparent material
- the coating (11) of translucent or transparent material which inhibits skidding.

21. An overlay or underlay as in Claim 20, characterized in that
the material of the decoration-carrier foil (25) contains a proportion of a material such as that of which the body (24) backed by injection wholly or essentially consists or which is employed as the basis for the body (24) backed by injection.

22. An overlay or underlay as in Claim 20, characterized in that
a coating (27) of adhesive is provided between the body (24) backed by injection and the decoration-carrier foil (25).

23. An overlay or underlay as in one of the Claims 15 to 22,
characterized in that
the coating (11) has a thickness from about 10µm to 100 µm.

24. An overlay or underlay as in one of the Claims 15 to 23,
characterized in that
the coating (11) consists of polyurethane (PUR) or is on the basis of polyurethane (PUR).

25. An overlay or underlay as in one of the Claims 20 to 24,
characterized in that
the decoration-carrier foil (25) consists of or on the basis of acrylbutadiene-styrene (ABS), polycarbonate (PC) or polystyrene (PS).

26. An overlay or underlay as in one of the Claims 20 to 25,
characterized in that
the thickness of the decoration-carrier foil (25) amounts from about 10µm up to 500µm, especially up to about 150 µm.

## Revendications

1. Procédé de fabrication d'une plaque de maintien supérieure ou inférieure (K), notamment une tablette en matière plastique, dont le fond présente une face supérieure plane (22) qui est éventuellement délimitée extérieurement par un bord en saillie (23) et qui comporte en tout ou en partie une couche (11), procédé selon lequel une couche (11) placée sur une bande porteuse (10) est introduite ou placée avec celle-ci dans un moule (3, 6) de coulée par injection et, pour fabriquer la plaque (K), la couche (11) est, au cours d'une opération d'injection ou par transfert garnie par l'arrière d'une masse polymère à laquelle elle se trouve liée, la bande porteuse (10) étant séparée de la couche (11) après durcissement de la masse polymère et démoulage de la plaque (K),
caractérisé en ce qu'
on utilise, pour réaliser la couche (11) un matériau qui présente par rapport à de la matière plastique et/ou céramique, et/ou du métal, un coefficient de frottement d'au moins 0,2, ce matériau étant déposé sur la bande (10) en continu ou par sections, sous la forme d'une couche continue percée de trous ou d'ouvertures.

2. Procédé selon la revendication 1,
caractérisé en ce qu'
on dépose sur la bande porteuse (10) des sections de couche prenant place à l'intérieur de la limite de la surface du fond (22) de la plaque (K) achevée et ces sections sont positionnées dans le moule d'injection (3, 6) et injectées par derrière.

3. Procédé selon la revendication 1 ou 2,
caractérisé en ce qu'
on dépose un décor (26) sur une feuille porte-décor (25) notamment par impression à plat ou au déroulé, puis sur le décor (26) et éventuellement sur la surface laissée libre par celui-ci sur la feuille (25), on dépose une couche (21) d'un agent adhésif à laquelle on superpose une couche translucide ou transparente (11), cette série de couches (11, 21, 26, 25) étant reliée de manière facilement séparable, par la surface de la couche (11), à la bande porteuse (10).

4. Procédé selon la revendication 3,
caractérisé en ce que
l'agent adhésif (21) est déposé sur le décor (26) quand celui-ci n'est pas encore durci, ou pas encore polymérisé ou pas encore séché.

5. Procédé selon la revendication 4,
caractérisé en ce qu'
on utilise comme produit de départ pour réaliser l'agent adhésif (21), une colle soluble dans l'eau et deux composants.

6. Procédé selon une des revendications 1 à 5,
caractérisé en ce que
la bande porteuse (10), quand elle n'est pas encore durcie ou totalement polymérisée ou quand la couche (11) encore élastique à chaud est reliée à celle-ci.

7. Procédé selon la revendication 6,
caractérisé en ce que
la bande porteuse (10) utilisée est à base de polyéthylène (PE) ou de polychlorure de vinyle (PVC).

8. Procédé selon la revendication 7,
caractérisé en ce que
la bande porteuse (10) utilisée a une épaisseur d'environ 15 à 300 microns, de préférence 30 à 150 microns environ.

9. Procédé selon une des revendications 1 à 8,
caractérisé en ce qu'
on utilise une feuille porte-décor (25) constituée ou à base d'acrybutadiène-styrol (ABS), de polycarbonate (PC) ou de polystyrol (PS) et présentant une épaisseur de 10 à 50 microns environ en particulier 150 microns environ.

10. Procédé selon une des revendications 1 à 9,
caractérisé en ce qu'
on utilise une feuille porte-décor (25) composée en partie du matériau utilisé pour l'injection par derrière (24).

11. Procédé selon une des revendications 1 à 10,
caractérisé en ce que
la couche (11) utilisée a une épaisseur de 10 à 100 microns environ.

12. Procédé selon une des revendications 1 à 11,
caractérisé en ce qu'
on utilise une couche (11) constituée ou à base de polyuréthane (PUR).

13. Procédé selon une des revendications 1 à 12,
caractérisé en ce qu'
on utilise une couche (11) ou une série de couches (11, 21, 26, 25) de dimensions telles que sa surface recouvre sur un ou plusieurs côtés la plaque (K) et, avant ou après l'injection d'une masse polymère effectuée par derrière on sépare de cette couche (11) ou de la série de couches (11, 21, 26, 25) une petite partie au moyen d'un dispositif de coupe (20) prévu dans l'outil de coulée par injection (3, 6), sans couper la bande porteuse (10).

14. Procédé selon une des revendications 1 à 13,
caractérisé en ce que
pour injecter derrière la couche (11) ou la série de couches (11, 21, 26, 25), on utilise de l'acrylbutadiènestyrol (ABS), du styrol-acrylnitrile (SAN) ou du polycarbonate (PC).

15. Plaque de maintien supérieure ou inférieure (K), en particulier tablette en matière plastique, dont le fond présente une surface supérieure plane (22) qui éventuellement est délimitée extérieurement par un bord en saillie (23) et comporte en tout ou en partie une couche (11), cette surface plane (22) étant fabriquée en partant d'une couche (11) qui est placée sur une bande porteuse (10) par laquelle cette couche est introduite dans le moule de coulée par injection (3, 6) et où, pendant la fabrication de la plaque (K), cette couche reçoit par derrière une masse polymère, par coulée par injection, puis, après durcissement de cette masse et démoulage, la bande porteuse (10) est séparée de la couche (11) , cette fabrication mettant en oeuvre le procédé défini par une des revendications 1 à 14 et utilisant éventuellement un dispositif selon une des revendications 15 à 18,
caractérisée en ce que
la couche (11) ou la série de couches (11, 21, 26, 25) est faite d'un matériau présentant par rapport à de la matière plastique et/ou céramique et/ou du métal un coefficient de frottement d'au moins 0,2, ce matériau présentant des trous ou des coupures et étant placé à l'intérieur des bords parallèles (23) de la plaque (K).

16. Plaque de maintien, en particulier tablette en matière plastique, fabriquée selon une des revendication de procédé 1 à 14,
caractérisée en ce que
la couche (11) ou la série de couches (11, 21, 26, 25) est posée au moins sur deux côtés opposés de la plaque de maintien (K) et aussi sur les bords parallèles (23)

17. Plaque de maintien selon la revendication 15 ou 16,
caractérisée en ce qu'
il est prévu une couche (27) d'agent adhésif entre la couche (11) et le corps (24) - (masse polymère) - injecté derrière la couche (11).

18. Plaque de maintien selon une des revendications 15 à 17,
caractérisée en ce que
le corps (24) injecté par derrière est une matière plastique constituée ou à base d'un ou de plusieurs des corps suivants : acrylbutadiène-styrol (ABS), styrolacrylonitrile (SAN), polypropylène (PP), polycarbonate (PC) ou polyamide (PA).

19. Plaque de maintien selon la revendication 17 ou 18,
caractérisée en ce que
la couche (27) d'agent adhésif est une matière plastique constituée ou à base d'un ou plusieurs des corps suivants : acrylbutadiène-styrol (ABS), styrol-acrylonitrile (SAN), polycarbonate (PC), polyamide (PA), polyuréthane (PUR) ou silicone (SI).

20. Plaque de maintien selon une des revendications 15 à 19,
caractérisée en ce qu'
il est prévu, sur le corps (24) injecté par derrière, les couches successives suivantes :
- une feuille porte-décor (25),
- un décor (26),
- une couche (21) d'un agent adhésif translucide ou transparent,
- la couche (11) anti-glissement, faite d'un matériau translucide ou transparent.

21. Plaque de maintien selon la revendication 20,
caractérisée en ce que
le matériau de la feuille porte-décor (25) est composé en partie du matériau constituant entièrement ou pour sa plus grande part le corps (24) injecté par derrière, ou utilisé comme base de corps (24).

22. Plaque de maintien selon la revendication 20,
caractérisée en ce qu'
il est prévu une couche (27) d'un agent adhésif entre le corps (24) injecté par derrière et la feuille porte-décor (25).

23. Plaque de maintien selon une des revendications 15 à 22,
caractérisée en ce que
la couche (11) a une épaisseur de 10 à 100 microns environ.

24. Plaque de maintien selon une des revendications 15 à 23,
caractérisée en ce que
la couche (11) est en polyuréthane (PUR) ou à base de polyuréthane (PUR).

25. Plaque de maintien selon une des revendications 20 à 24,
caractérisée en ce que
la pellicule porte-décor (25) est composée de ou à base d'acrylobutadiène-styrol (ABS), de polycarbonate (PC) ou de polystyrol (PS).

26. Plaque de maintien selon une des revendications 20 à 25,
caractérisée en ce que
l'épaisseur de la feuille porte-décor (25) est de 10 à 500 microns environ, en particulier de 150 microns environ.
